# EUROPEAN PATENT SPECIFICATION

(11) **EP 1 192 222 B1**
(45) Date of publication and mention of the grant of the patent: **13.09.2006**
(21) Application number: 00947870.2
(22) Date of filing: 23.06.2000
(51) Int. Cl.: C08L 67/02, C08K 5/053

(54) **POLYESTER COMPOSITIONS OF LOW RESIDUAL ALDEHYDE CONTENT**
POLYESTERZUSAMMENSETZUNGEN MIT NIEDRIGEM RESTALDEHYDGEHALT
COMPOSITIONS DE POLYESTER A FAIBLE TENEUR RESIDUELLE EN ALDEHYDE

(30) Priority: 30.06.1999 US 141663 P; 30.06.1999 US 141664 P
(43) Date of publication of application: 03.04.2002
(73) Proprietor: Ciba Specialty Chemicals Holding Inc., 4057 Basel (CH)
(72) Inventor: ANDREWS, Stephen, Mark, New Fairfield, CT 06812-2913 (US); LAZZARI, Dario, I-40138 Bologna (IT); ODORISIO, Paul, Angelo, Leonia, NJ 07605 (US); SIMON, Dirk, D-67112 Mutterstadt (DE)
(86) International application number: PCT/EP2000/005819
(87) International publication number: WO 2001/002489

(56) References cited:
- EP-A- 0 061 210
- EP-A- 0 691 370
- PATENT ABSTRACTS OF JAPAN vol. 012, no. 143 (C-492), 30 April 1988 (1988-04-30) & JP 62 257959 A (NISSEI EE S B KIKAI KK), 10 November 1987 (1987-11-10) cited in the application

## Description

A mixture of a polyester, such as poly(ethylene terephthalate) PET, and a second polymer which is poly(vinyl alcohol) or an ethylene/vinyl alcohol copolymer when extrusion compounded exhibits a lower residual acetaldehyde content than does PET alone when similarly treated. The invention pertains to any polyester used in the manufacture of bottles or containers which in turn are used to store consumer materials, especially food, beverages and most especially water.

U.S. Patent 4,361,681 teaches that polyester containing anhydride end-cap agents have a reduced acetaldehyde generation rate.

U. S. Patent 5,459,224 discloses polyesters having 4-oxybenzylidene end-cap agents to impart improved weatherability and photostability, but no mention is made as to evolution of acetaldehyde. However, it is indicated that such polyesters are suitable for food and beverage packaging.

Polyesters can be synthesized by a number of routes known in the art using a variety of catalyst systems. EP-A-0 826 713 teaches that lower levels of acetaldehyde occur during copolymerization of PET when a phosphite such as bis(2,4-di-tert-butylphenyl)pentaerythritol phosphite is present during the polymerization.

U. S. Patent 4,837,115; 5,258,233; 5,266,413; 5,340,884; 5,648,032 and 5,650,469; and WO-A-93/20147; WO-A-93/23474; WO-A-98/07786 and WO-A-98/39388 teach the use of polyamides as a means of reducing the concentration of acetaldehyde, presumedly via a Schiff-base reaction with the aldehyde, which is reversible in the presence of water.

EP-A-0 191 701 describes biaxially oriented container having excellent barrier properties said container comprising a blend of a poly(ethylene terephthalate) resin and an ethylene/vinyl alcohol copolymer resin. This reference is focused on improved gas barrier properties and is silent as to any reduction of acetaldehyde content.

Japanese Sho 62-257959 describes biaxially stretched vessels built of synthetic resin consisting of poly(ethylene terephthalate) blended with a copolymer of a polyamide, or blended with ethylene/vinyl alcohol copolymer at a weight fraction of 0.1 to 15 percent. The examples are limited to a single EVOH polymer (EVEL® G110, Kuraray Co.). It is taught that a lower level of acetaldehyde occurs when the EVOH polymer is present.

When ethylene/vinyl alcohol copolymer is added to a polyester even at a level of 0.1% by weight (1000 ppm), the resulting blend when extruded into film or plaque exhibits unacceptable haze usually seen as a graying effect. This haze is perceptible and severely limits the amount of ethylene/vinyl alcohol copolymer which can be used for the purpose of reducing the level of acetaldehyde. The instant invention is distinguished from the prior art by virtue of using lesser amounts (50-750 ppm) of ethylene/vinyl alcohol copolymer which do not produce unacceptable haze, but still provide significant reduction in the level of acetaldehyde formed during processing.

EP-A-0 714 832 teaches a method of manufacturing a container comprising poly(ethylene terephthalate), polycarbonate or PEN polyester with an additive in the bottle wall which binds acetaldehyde. The additive is generally described as a polyamide.

U. S. Patent 5,656,221 describes a process of producing polyester with reduced acetaldehyde concentration using certain catalysts or inert gas conditions or by adding an amide compound. These include commercial polyamides or long chain aliphatic amide compounds.

U. S. Patent 5,856,385 teaches the use of polyamide or amide-wax to reduce the level of acetaldehyde which occurs when sorbitol-based clarifying agent is heated in polyolefins.

The invention is useful for any polyester where aldehydic compounds, especially acetaldehyde, are formed or evolved during thermal processing of said polyester. Thermal processing of PET includes the synthesis of PET, thermal exposure during solid state polymerization (SSP), any injection molding, injection-blow molding or stretch-blow molding used in the manufacture of preforms, parisons or bottles and containers, or extrusion of film, or during any melt processing of PET above its glass transition temperature and below its decomposition temperature.

The instant invention provides for a lower amount of contaminants (e.g. aldehydes) in PET water bottles thus providing for improved taste or flavor in bottled water or other bottled beverages in said PET containers. The reduction in the amount of acetaldehyde is highly beneficial in this respect. Acetaldehyde is known as a decomposition product of polyesters such as PET. The acetaldehyde imparts an undesirable taste or flavor to bottled water stored in PET bottles. It has been a long sought objective of the industry to reduce the level of acetaldehyde which migrates out of the PET bottle walls into the water or other beverage stored therein. A number of engineering or design changes to extruders, injection molding machines for preforms and bottle making machinery have been made to minimize formation of acetaldehyde when poly(ethylene terephthalate) PET is processed. Modification to the PET composition itself have been made to lower its melting point or its melt viscosity in order to allow less severe thermal or mechanical damage when PET is processed into preforms or bottles.

The instant invention pertains to a polyester composition, stabilized against the formation of aldehydic contaminants during melt processing of said polyester, which comprises
(a) a polyester, and
(b) in an amount of 0.005 to 0.075% by weight of the stabilized composition a second polymer which is poly(vinyl alcohol) or ethylene/vinyl alcohol copolymer.

Of interest are compositions wherein, component (b) is 0.01 to 0.05 %, most preferably 0.02 to 0.05 %, by weight of the stabilized composition.

The polyester of component (a) has dicarboxylic acid repeat units selected from the group consisting of aromatic dicarboxylic acids having 8 to 14 carbon atoms, aliphatic dicarboxylic acids having 4 to 12 carbon atoms, cycloaliphatic dicarboxylic acids having 8 to 12 carbon atoms, and mixtures thereof.

Preferably such diacids are terephthalic acid, isophthalic acid, o-phthalic acid, naphthalene dicarboxylic acid, cyclohexane dicarboxylic acid, cyclohexanediacetic acid, diphenyl-4,4'-dicarboxylic acid, succinic acid, glutaric acid, adipic acid, sebacic acid and mixtures thereof.

Especially preferred are terephthalic acid and 2,6-naphthalene dicarboxylic acid.

The diol or glycol portion of the polyester of component (a) are derived from the generic formula HO-R-OH where R is an aliphatic, cycloaliphatic or aromatic moiety of 2 to 18 carbon atoms.

Preferably such diols or glycols are ethylene glycol, diethylene glycol, triethylene glycol, propane-1,3-diol, butane-1,4-diol, pentane-1,5-diol, hexane-1,6-diol, 1,4-cyclohexanedimethanol, 3-methylpentane-2,4-diol, 2-methylpentane-1,4-diol, 2,2-diethylpropane-1,3-diol, 1,4-di-(hydroxyethoxy)benzene, 2,2-bis(4-hydroxycyclohexyl)-propane, 2,4-dihydroxy-1,1,3,3-tetramethylcyclobutane, 2,2-bis-(3-hydroxyethoxyphenyl)propane, 2,2-bis-(4-hydroxypropoxyphenyl)ethane and mixtures thereof.

Most preferably, the diol is ethylene glycol.

The polyester of component (a) is preferably poly(ethylene terephthalate) PET or poly(ethylene 2,6-naphthalene-2,6-dicarboxylate); most preferably poly(ethylene terephthalate).

It is also contemplated that the polyester of component (a) can also be a blend of polyesters or copolyesters including components mentioned above.

It is contemplated that the polyester of component (a) can be virgin polymer or alternatively polymer recyclate. Additionally, it is possible to prepare a concentrate of the polymer described for component (b) in a polyester carrier resin which is then combined with the polyester of component (a) to obtain the stabilized compositions described previously.

Preferably, if the second polymer is an ethylene/vinyl alcohol copolymer, the mole ratio of ethylene to vinyl alcohol is 99:1 to 1:99. Especially preferred, is the ethylene/vinyl alcohol copolymer where the mole ratio of ethylene to vinyl alcohol is 50:50 to 20:80.

The ethylene/vinyl alcohol copolymers of component (b) can be random or block copolymers.

The instant invention also pertains to a process for preventing the formation of aldehydic contaminants during melt processing of a polyester which comprises incorporating into said polyester 0.005 to 0.075% by weight of a second polymer which is poly(vinyl alcohol) or ethylene/vinyl alcohol copolymer.

A preferred embodiment of the present invention is the use of 0.005 to 0.075% by weight of a second polymer which is poly(vinyl alcohol) or ethylene/vinyl alcohol copolymer as stabilizer for preventing the formation of aldehydic contaminants during melt processing of a polyester.

The instant invention shows that the vinyl alcohol group, especially in combination with one or more copolymerizable vinyl monomers, gives results which are useful in supplying a market need. While the poly(vinyl alcohol) homopolymer provides some reduction in acetaldehyde content in poly(ethylene terephthalate), the poly(vinyl alcohol-ethylene) copolymers provide a much better reduction in acetaldehyde in poly(ethylene terephthalate).

The following examples are for illustrative purposes only and are not to be construed to limit the scope of the instant invention in any manner whatsoever.
General: PET bottle grade pellets are subjected to extrusion compounding to simulate the heat history which PET experiences when thermally injection molded into bottle preforms and subsequently stretch-blow molded into bottles. The efficacy of an additive added to reduce the formation of acetaldehyde is determined by quantitative analysis using thermal desorption GC-MS. An unstabilized PET is extruded each day to provide a control polymer for measuring acetaldehyde formation.
Extrusion: PET is predried in vacuo under nitrogen at an oven temperature of about 70°C to a moisture level of about 30 ppm which is verified on a Mitsubishi VA-O6 moisturemeter. A Leistritz 18 mm or 27 mm corotating, non-intermeshing twin screw extruder is configured as follows: set temps = throat (220-230°C), zones and die (270°C), actual extrudate melt temperature is 275-280°C, screw at 100-110 rpm, hopper feeder = 10-15 ppm.
PET Pellet Color: Yellowness Index (YI), and L*, a*, b* by ASTM D1925, D65 10degm specular included, measured on PET pellets using a DCI spectrophotometer.
Acetaldehyde Analysis: The concentration of acetaldehyde in PET is quantitatively determined using a thermal desorption GC-MS method adapted from B. Nijassen et al., Packaging Technology and Science, 9, 175 (1996); S. Yong Lee, SPE ANTEC 1997, pp 857-861; and M. Dong et al., J. Chromatographic Science, 18, 242 (1980). A general example follows below:
   The PET samples are analyzed, in duplicate, by weighing 250 mg of powdered PET pellets (cryogenically pulverized) in a 5 mL crimp sealed headspace vial. The sample vial is heated at 120°C for one hour in a Tekmar model 5000 static headspace analyzer. The headspace gas (5 cc) is then transferred via a heated transfer line to a Fisons MD-800 GC-MS system for SIR detection of the acetaldehyde. The acetaldehyde is detected by monitoring its fragment ions of 29 and 44 m/e. The Total Ion Current (TIC) of the GC-MS is also monitored in the retention time region of 4-8 minutes. By doing this the presence of acetaldehyde in the samples is confirmed by three different detectors. By using a known acetaldehyde value for PET, the ratio of peak areas for the known PET resin and for the experimental PET resin blends are compared and the amount of acetaldehyde in the experimental blend can be obtained.

### Example 1: Stabilization of PET.

Unstabilized commercial PET (Cleartuf® 7207, Shell) is used as a control PET. Several additives listed below demonstrate a significant reduction in the amount of acetaldehyde (AA) versus the amount seen when unstabilized PET is extrusion compounded. The % AA reduction is the amount less compared to the amount of AA in the control. The total ion current (TIC) data run in triplicate for the control PET has a standard deviation of σ = 0.35. The results are summarized in Table 1.

**Table 1:**

| Example | Additive weight % | % AA Reduction | TIC ave ppm AA | Pellet | Color |
|---|---|---|---|---|---|
| | | | | YI | b* |
| 1a^{a)} | ― | ― | 6.8 | 14.4 | 3.4 |
| 1b^{b)} | 0.04 % A^{c)} | 31 | 4.7 | 18.5 | 5.7 |
| 1c^{b)} | 0.04 % B^{d)} | 38 | 4.2 | 10.1 | 1.8 |
| 1d^{b)} | 0.16 % B^{d)} | 38 | 4.2 | 10.1 | 2.0 |
| 1e^{b)} | 0.40 % B^{d)} | 35 | 4.4 | 8.7 | 1.5 |
| 1f^{b)} | 1.00 % B^{d)} | 42 | 3.9 | 10.4 | 2.5 |

| | | | | | |
|---|---|---|---|---|---|
| a) Example for comparison. | | | | | |
| b) Example according to the invention. | | | | | |
| c) A is poly(vinyl alcohol) [PVA]. | | | | | |
| d) B is ethylene/vinyl alcohol copolymer, 40 % ethylene. | | | | | |

### Example 2: Stabilization of PET.

In another series of tests following the general procedure of Example 1, three ethylene/vinyl alcohol copolymers with different mole percentages of vinyl alcohol are seen to be generally effective in reducing the level of acetaldehyde in PET after one extrusion compounding operation. The results are summarized in Table 2.

**Table 2:**

| Example | Additive weight % | % AA Reduction | TIC ave ppm AA | Pellet Color | |
|---|---|---|---|---|---|
| | | | | YI | b* |
| 2a^{a)} | ― | ― | 3.6 | 15.1 | 4.1 |
| 2b^{b)} | 0.40 % C^{e)} | 16 | 3.0 | 11.8 | 2.8 |
| 2c^{b)} | 1.00 % C^{e)} | 11 | 3.2 | 12.2 | 3.4 |
| 2d^{b)} | 0.40 % D^{f)} | 19 | 2.9 | 13.1 | 3.7 |
| 2e^{b)} | 1.00 % D^{f)} | 38 | 2.2 | 13.0 | 3.9 |
| 2f^{b)} | 0.40 % E^{g)} | 28 | 2.6 | 14.3 | 4.4 |

| | | | | | |
|---|---|---|---|---|---|
| a) Example for comparison. | | | | | |
| b) Example according to the invention. | | | | | |
| e) C is ethylene/vinyl alcohol copolymer, 38 % ethylene. | | | | | |
| f) D is ethylene/vinyl alcohol copolymer, 32 % ethylene. | | | | | |
| g) E is ethylene/vinyl alcohol copolymer, 27 % ethylene. | | | | | |

The exact nature of the ethylene/vinyl alcohol copolymer determines the level of effectiveness of the additive.

### Example 3: Stabilization of PET.

Unstabilized commercial poly(ethylene terephthalate), (Eastpak® 9921W, Eastman) is used as a control poly(ethylene terephthlate). Bottle preforms of approximately 54 gram weight are produced on a commercial scale preform molding machine (5,000 preforms/hour; Tₘₐₓ 290°C). Acetaldehyde is measured on ground polymer powder obtained from the preforms as described in Example 1. Powder containing several additives listed below demonstrate a significant reduction in the amount of acetaldehyde (AA) versus the amount seen when unstabilized poly(ethylene terephthalate) is injection molded into preforms. The % AA reduction is the amount less compared to the amount AA observed for the control sample. The results are summarized in Table 3.

**Table 3:**

| Example | Additive weight % | % AA Reduction |
|---|---|---|
| 3a^{a)} | ― | ― |
| 3b^{b)} | 0.20 % E^{g)} | 41 |
| 3c^{b)} | 0.50 % E^{g)} | 54 |
| 3d^{b)} | 0.50^{h)} % E^{g)} | 55 |
| 3e^{b)} | 1.00 % E^{g)} | 66 |

| | | |
|---|---|---|
| a) Example for comparison. | | |
| b) Example according to the invention. | | |
| g) E is ethylene/vinyl alcohol copolymer, 27 % ethylene. | | |
| h) The additive E is added as a masterbatch and let down to a final 0.5% level in the poly-(ethylene terephthalate) preform. | | |

The use of the ethylene/vinyl alcohol copolymer results in a substantial reduction of acetaldehyde level versus the control.

### Example 4: Haze of injection Molded PET Plaques.

The extrusion compounding procedure of Example 1 is used to prepare compounded blends of PET with an ethylene/vinyl alcohol copolymer with 27% by weight ethylene as component (b). Both unstabilized commercial PET (Cleartuf® 7201 Shell) and the compounded PET blends are injection molded into 2 x 2 x 60 mm plaques using a BOY 50M injection Molder at a die temperature of 288°C. Plaques are obtained for the PET without any stabilizer as control and with 0.05 % and with 0.10 % of additive E present. A BYK-Gardner Haze meter is used to measure haze. The haze values of the plaques (quadruple values) are obtained and averaged, and visual observation of the plaques are also noted as seen in the Table 4 below.

**Table 4:**

| Example | Additive weight % | Haze values (4 mesurements) | | | | |
|---|---|---|---|---|---|---|
| | | 1 | 2 | 3 | 4 | average |
| 4a^{a)} | ― | 2.3 | 1.8 | 2.0 | 1.8 | 1.975 |
| 4b^{b)} | 0.05 % E^{g)} | 3.7 | 3.8 | 3.8 | 3.6 | 3.725 |
| 4c^{b)} | 0.10 % E^{g)} | 6.0 | 5.9 | 5.8 | 5.6 | 5.825 |

| | | | | | | |
|---|---|---|---|---|---|---|
| a) Example for comparison. | | | | | | |
| b) Example according to the invention. | | | | | | |
| g) E is ethylene/vinyl alcohol copolymer, 27 % ethylene. | | | | | | |

The control plaques are clear and without any discernible haze. The plaques containing 0.05 % by weight of E are clear with an almost indiscernible bluish tint. The plaques containing 0.10 % by weight of E have a smoky appearance which is unacceptable. The pellets used in this case feel waxy and adjustments are needed to the injection process (increase screw speed and reduce pressure) to obtain the plaques. These data indicate that the 0.1 % ethylene/vinyl alcohol copolymer level described by Japanese Sho 62-257959, while reducing the level of acetaldehyde, led to an unacceptable level of haze in the stabilized PET composition.

## Claims

1. A polyester composition, stabilized against the formation of aldehydic contaminants during melt processing of said polyester, which comprises
(a) a polyester, and
(b) in an amount of 0.005 to 0.075% by weight of the stabilized composition a second polymer which is poly(vinyl alcohol) or ethylene/vinyl alcohol copolymer.

2. A composition according to claim 1 wherein the polyester of component (a) has dicarboxylic acid repeat units selected from the group consisting of aromatic dicarboxylic acids having 8 to 14 carbon atoms, aliphatic dicarboxylic acids having 4 to 12 carbon atoms, cycloaliphatic dicarboxylic acids having 8 to 12 carbon atoms, and mixtures thereof.

3. A composition according to claim 2 wherein the dicarboxylic acid is terephthalic acid, isophthalic acid, o-phthalic acid, naphthalene dicarboxylic acid, cyclohexane dicarboxylic acid, cyclohexanediacetic acid, diphenyl-4,4'-dicarboxylic acid, succinic acid, glutaric acid, adipic acid, sebacic acid and mixtures thereof.

4. A composition according to claim 2 wherein the dicarboxylic acid is terephthalic acid or 2,6-naphthalene dicarboxylic acid.

5. A composition according to claim 1 wherein the diol portion of the polyester of component (a) is derived from the generic formula HO-R-OH where R is an aliphatic, cycloaliphatic or aromatic moiety of 2 to 18 carbon atoms.

6. A composition according to claim 5 wherein the diol is ethylene glycol, diethylene glycol, triethylene glycol, propane-1,3-diol, butane-1,4-diol, pentane-1,5-diol, hexane-1,6-diol, 1,4-cyclohexanedimethanol, 3-methylpentane-2,4-diol, 2-methylpentane-1,4-diol, 2,2-diethylpropane-1,3-diol, 1,4-di-(hydroxyethoxy)benzene, 2,2-bis(4-hydroxycyclohexyl)-propane, 2,4-dihydroxy-1,1,3,3-tetramethylcyclobutane, 2,2-bis-(3-hydroxyethoxyphenyl)propane, 2,2-bis-(4-hydroxypropoxyphenyl)ethane and mixtures thereof.

7. A composition according to claim 6 wherein the diol is ethylene glycol.

8. A composition according to claim 1 wherein the polyester of component (a) is poly(ethylene terephthalate) PET or poly(ethylene 2,6-naphthalene-2,6-dicarboxylate).

9. A composition according to claim 1 wherein the mole ratio of ethylene to vinyl alcohol in the ethylene/vinyl alcohol copolymer is 99:1 to 1:99.

10. A process for preventing the formation of aldehydic contaminants during melt processing of a polyester which comprises incorporating into said polyester 0.005 to 0.075% by weight of a second polymer which is poly(vinyl alcohol) or ethylene/vinyl alcohol copolymer.

11. Use of 0.005 to 0.075% by weight of a second polymer which is poly(vinyl alcohol) or ethylene/vinyl alcohol copolymer as stabilizer for preventing the formation of aldehydic contaminants during melt processing of a polyester.

## Patentansprüche

1. Polyesterzusammensetzung, stabilisiert gegen die Bildung von Aldehydverunreinigungen während des Schmelzverarbeitens des Polyesters, umfassend
(a) einen Polyester und
(b) ein zweites Polymer, das ein Poly(vinylalkohol) oder ein Ethylen/Vinylalkohol-Copolymer ist, in einer Menge von 0,005 bis 0,075 %, bezogen auf das Gewicht der stabilisierten Zusammensetzung.

2. Zusammensetzung nach Anspruch 1, worin der Polyester der Komponente (a) Dicarbonsäurewiederholungseinheiten aufweist, ausgewählt aus der Gruppe, bestehend aus aromatischen Dicarbonsäuren mit 8 bis 14 Kohlenstoffatomen, aliphatischen Dicarbonsäuren mit 4 bis 12 Kohlenstoffatomen, cycloaliphatischen Dicarbonsäuren mit 8 bis 12 Kohlenstoffatomen, und Gemischen davon.

3. Zusammensetzung nach Anspruch 2, worin die Dicarbonsäure Terephthalsäure, Isophthalsäure, o-Phthalsäure, Naphthalindicarbonsäure, Cyclohexandicarbonsäure, Cyclohexandiessigsäure, Diphenyl-4,4'-dicarbonsäure, Bernsteinsäure, Glutarsäure, Adipinsäure, Sebacinsäure und Gemische davon ist.

4. Zusammensetzung nach Anspruch 2, worin die Dicarbonsäure Terephthalsäure oder 2,6-Naphthalindicarbonsäure ist.

5. Zusammensetzung nach Anspruch 1, worin der Diolteil des Polyesters der Komponente (a) von der generischen Formel HO-R-OH abgeleitet ist, wo R eine aliphatische, cycloaliphatische oder aromatische Einheit mit 2 bis 18 Kohlenstoffatomen ist.

6. Zusammensetzung nach Anspruch 5, worin das Diol Ethylenglykol, Diethylenglykol, Triethylenglykol, Propan-1,3-diol, Butan-1,4-diol, Pentan-1,5-diol, Hexan-1,6-diol, 1,4-Cyclohexandimethanol, 3-Methylpentan-2,4-diol, 2-Methylpentan-1,4-diol, 2,2-Diethylpropan-1,3-diol, 1,4-Di-(hydroxyethoxy)benzol, 2,2-Bis(4-hydroxycyclohexyl)-propan, 2,4-Dihydroxy-1,1,3,3-tetramethylcyclobutan, 2,2-Bis-(3-hydroxyethoxyphenyl)propan, 2,2-Bis-(4-hydroxypropoxyphenyl)ethan und Gemische davon ist.

7. Zusammensetzung nach Anspruch 6, worin das Diol Ethylenglykol ist.

8. Zusammensetzung nach Anspruch 1, worin der Polyester der Komponente (a) Poly-(ethylenterephthalat) PET oder Poly(ethylen-2,6-naphthalin-2,6-dicarboxylat) ist.

9. Zusammensetzung nach Anspruch 1, worin das Molverhältnis von Ethylen zu Vinylalkohol in dem Ethylen/Vinylalkohol-Copolymer 99 : 1 bis 1 : 99 beträgt.

10. Verfahren zur Verhinderung der Bildung von Aldehydverunreinigungen während des Schmelzverarbeitens eines Polyesters, umfassend das Einführen von 0,005 bis 0,075 Gew.-% eines zweiten Polymers, das ein Poly(vinylalkohol) oder ein Ethylen/Vinylalkohol-Copolymer ist, in den Polyester.

11. Verwendung von 0,005 bis 0,075 Gew.-% eines zweiten Polymers, das ein Poly(vinylalkohol) oder ein Ethylen/Vinylalkohol-Copolymer ist, als Stabilisator zur Verhinderung der Bildung von Aldehydverunreinigungen während des Schmelzverarbeitens eines Polyesters.

## Revendications

1. Composition de polyester stabilisée vis à vis de la formation de contaminants aldéhydiques pendant un traitement à l'état fondu dudit polyester, qui comprend :
(a) un polyester et,
(b) à raison de 0,005% à 0,075% en poids de la composition stabilisée, un deuxième polymère qui est le poly(alcool vinylique) ou un copolymère éthylène/alcool vinylique.

2. Composition selon la revendication 1, dans laquelle le polyester du composant (a) comprend des motifs récurrents d'acide dicarboxylique choisis dans le groupe formé par les acides dicarboxyliques aromatiques contenant 8 à 14 atomes de carbone, les acides dicarboxyliques aliphatiques contenant 4 à 12 atomes de carbone, les acides dicarboxyliques cycloaliphatiques contenant 8 à 12 atomes de carbone et les mélanges de ceux-ci.

3. Composition selon la revendication 2, dans laquelle l'acide dicarboxylique est l'acide téréphtalique, l'acide isophtalique, l'acide o-phtalique, l'acide naphtalènedicarboxylique, l'acide cyclohexanedicarboxylique, l'acide cyclohexanediacétique, l'acide diphényl-4,4'-dicarboxylique, l'acide succinique, l'acide glutarique, l'acide adipique, l'acide sébacique et les mélanges de ceux-ci.

4. Composition selon la revendication 2, dans laquelle l'acide dicarboxylique est l'acide téréphtalique ou l'acide 2,6-naphtalènedicarboxylique.

5. Composition selon la revendication 1, dans laquelle la partie diol du polyester du composant (a) est dérivée de la formule générique HO-R-OH dans laquelle R représente une fraction aliphatique, cycloaliphatique ou aromatique de 2 à 18 atomes de carbone.

6. Composition selon la revendication 5, dans laquelle le diol est l'éthylèneglycol, le diéthylèneglycol, le triéthylèneglycol, le propane-1,3-diol, le butane-1,4-diol, le pentane-1,5-diol, l'hexane-1,6-diol, le 1,4-cyclohexanediméthanol, le 3-méthylpentane-2,4-diol, le 2-méthylpentane-1,4-diol, le 2,2-diéthylpropane-1,3-diol, le 1,4-di(hydroxyéthoxy)benzène, le 2,2-bis(4-hydroxycyclohexyl)propane, le 2,4-dihydroxy-1,1,3,3-tétraméthylcyclobutane, le 2,2-bis(3-hydroxyéthoxyphényl)propane, le 2,2-bis(4-hydroxypropoxyphényl)éthane et les mélanges de ceux-ci.

7. Composition selon la revendication 6, dans laquelle le diol est l'éthylèneglycol.

8. Composition selon la revendication 1, dans laquelle le polyester du composant (a) est le poly(téréphtalate d'éthylène) PET ou le poly(2,6-naphtalène-2,6-dicarboxylate d'éthylène).

9. Composition selon la revendication 1, dans laquelle le rapport molaire de l'éthylène à l'alcool vinylique dans le copolymère éthylène/alcool vinylique est de 99:1 à 1:99.

10. Procédé permettant d'empêcher la formation de contaminants aldéhydiques pendant le traitement à l'état fondu d'un polyester qui comprend l'incorporation, audit polyester, de 0,005% à 0,075% en poids d'un deuxième polymère qui est le poly(alcool vinylique) ou un copolymère éthylène/alcool vinylique.

11. Utilisation de 0,005% à 0,075% en poids d'un deuxième polymère qui est le poly(alcool vinylique) ou un copolymère éthylène/alcool vinylique en tant que stabilisant pour empêcher la formation de contaminants aldéhydiques pendant le traitement à l'état fondu d'un polyester.
